# EUROPEAN PATENT APPLICATION

(11) **EP 4 431 267 A1**
(43) Date of publication of application: **18.09.2024**
(21) Application number: 24163835.2
(22) Date of filing: 15.03.2024
(51) Int. Cl.: B29C 65/60, B29K 23/00, B29K 101/12

(54) **RECEPTACLE ASSEMBLY FOR A FASTENER IN FILAMENT MESH STRUCTURE**

(30) Priority: 17.03.2023 US 202363453066 P; 19.02.2024 US 202418444868
(71) Applicant: Lear Corporation, Southfield, MI 48033 (US)
(72) Inventor: Repke, Eric, Milford, MI, 48380 (US)
(74) Representative: Grünecker Patent- und Rechtsanwälte PartG mbB

(57) **Abstract**

A body of extruded polymer fibers formed and welded together in a three-dimensional shape with a fastener comprising a stake inserted into the body. The stake comprises a head that secures the fastener to the body. The body comprises extruded polymer filaments randomly oriented and bonded together to form a three-dimensional mesh structure. The polymer stake extends from a plate through a first side toward a second side of the body to a location on the surface of the body or a location within the body. A portion of the filaments is disposed between the first side of the body and the head. A method of attaching the fastener to the body comprises inserting the stake, forming the head, and attaching the head to the body.

## Description

### REFERENCE TO RELATED APPLICATIONS

This application claims the benefit of U.S. provisional application Serial No. 63/453,066 filed March 17, 2023, the disclosure of which is hereby incorporated in its entirety by reference herein.

### TECHNICAL FIELD

This disclosure relates to a receptacle assembly for attaching a fastener to one or more bodies of extruded polymer filaments connected and bonded together to form a receptacle in three-dimensional body comprising a filament mesh structure.

### BRIEF DESCRIPTION OF THE DRAWINGS

Figure 1 is a perspective view of an example of a seat assembly comprising, in part, a filament mesh structure.
Figure 2 is schematic view of an example of a manufacturing system for making the filament mesh structure.
FIGURE 3A is a perspective view of a fastener, a three-dimensional mesh structure formed of extruded polymer filaments in position to be received on the fastener, and a forming tool in position to form a stake portion of the fastener.
FIGURE 3B is a perspective view of the fastener, the three-dimensional mesh structure, and the forming tool, forming a head on a stake portion of the fastener.
FIGURE 3C is a perspective view of the fastener, the three-dimensional mesh structure, and the forming tool after forming a head on the stake portion of the fastener.
FIGURE 4 is a diagrammatic view of a three-dimensional mesh structure, formed of extruded polymer filaments
FIGURE 5A is a plan view of the fastener showing a plurality of stakes extending from a plate portion of the fastener.
FIGURE 5B is a perspective view of the fastener shown in figure 5A.
FIGURE 5C is a perspective view of the fastener shown in figure 3A with a first body of the extruded polymer filaments received on the fastener and a second body of extruded polymer filaments in position to be assembled to the fastener.
FIGURE 5D is a plan view of the fastener attached two extruded polymer filament bodies.
FIGURE 5E is a perspective view of the fastener with both of the extruded polymer filament bodies received on the fastener.
FIGURE 6 is an elevation view partially in cross section of another embodiment of the fastener that comprises a clip for engaging a portion of the frame on the opposite side of the plate from the stake.

### DETAILED DESCRIPTION

Reference will now be made in detail to embodiments, examples of which are illustrated in the accompanying drawings. In the following detailed description, numerous specific details are set forth to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g*., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing specific embodiments and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

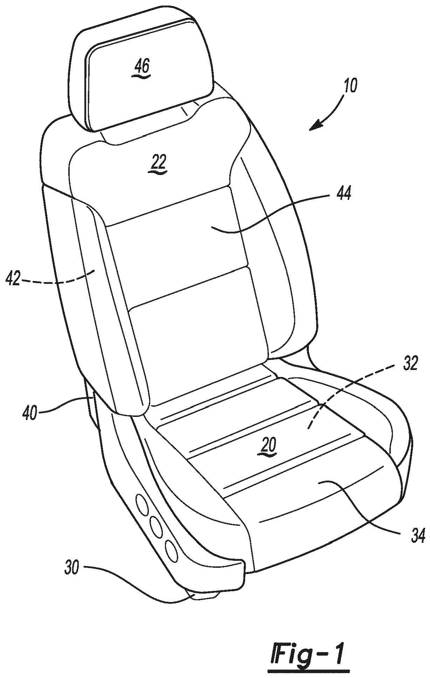

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats as shown, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 comprises a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 comprises a seat bottom frame 30, a cushion 32, and a trim cover 34.

The seat bottom frame 30 is a structure that supports the cushion 32. The seat bottom frame 30 comprises one or more structural members and may be made of any suitable material, such as a metal alloy, polymeric material, fiber reinforced polymeric material, or combinations thereof. In some configurations, the seat bottom frame 30 comprises a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad as will be discussed in more detail below.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second-row seat assemblies. The seat back 22 comprises a seat back frame 40, a cushion 32, a trim cover 44, and optionally a head restraint 46.

The seat back frame 40 is a structure that supports the cushion 32. The seat back frame 40 comprises one or more structural members and may be made of any suitable material, such as a metal alloy, polymeric material, fiber reinforced polymeric material, or combinations thereof. In some configurations, the seat back frame 40 comprises a panel, pan, suspension mat, or suspension wires upon which the cushion 32 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad as will be discussed in more detail below.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

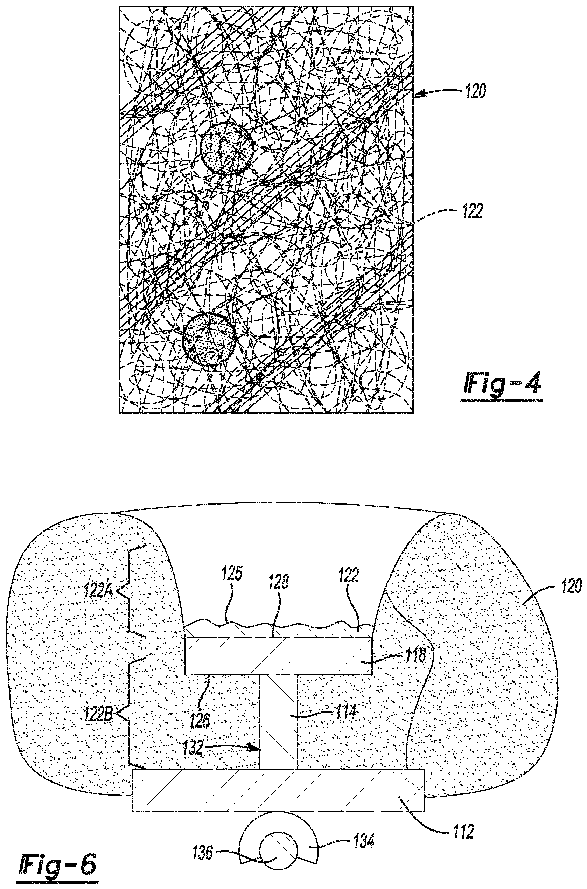

Referring to Figure 4, an example of a three-dimensional mesh structure 120 is shown. It is to be understood that the structure and description of the three-dimensional mesh structure 120 is applicable to the cushion 32 of the seat bottom 20, the cushion 42 of the seat back 22, or both.

The cushions 32 and 42 are non-foam components or include at least one non-foam component. The non-foam component is primarily referred to as a three-dimensional mesh structure 120 but may also be referred to as a stranded member, looped member, entangled member, filament mesh structure, mesh structure, stranded mesh, looped mesh, entangled mesh, or mesh cushion. The cushions 32 and 42 are depicted as non-foam components that do not include a foam component or foam material, such as urethane or polyurethane foam; however, it is contemplated that the cushions 32 and 42 may also include a foam component or foam material in addition to a non-foam component to provide additional cushioning or localized cushioning for a seat occupant. For example, foam material may be provided between the cushion 32 and a trim cover (e.g., trim cover 34, 44) that is disposed on the cushions 32 and 42, within the cushions 32 and 42, or combinations thereof. Reducing the amount of foam material that is provided with the cushions 32 and 42 or eliminating foam material from the cushions 32 and 42 reduces weight and may improve support and comfort of a seat occupant. In addition, eliminating foam material may facilitate recycling of the cushions 32 and 42.

The cushion 32 is described below in the context of a cushion 32 that does not include foam material. In this context, the three-dimensional mesh structure 120 is made of filaments 122 of polymeric material that are randomly looped, bent, curled, or entangled and are bonded together as will be discussed in more detail below. An example of the filaments 122 is shown in Figure 4. The filaments 122 are directed bonded to other filaments 122 rather than being indirectly bonded with a resin or other intermediate material.

The filaments 122, which may also be referred to as strands or threads, are made of any suitable material or materials. In some configurations, the filaments 122 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low-density polyethylene (LLPDE). The filament material may be recyclable unlike foam material or more easily recycled than foam material. It is also contemplated that the filaments 122 comprise reinforcement fibers and that the reinforcement fibers may not be made of a thermoplastic material.

In some configurations, a filament 122 may be a monofilament that is made of a single material. In some configurations, a filament 122 is made of multiple materials. As an example, a filament 122 made of multiple materials may include a core that is made of a first thermoplastic material and a sheath that encircles the core and is made of a second thermoplastic material that differs from the first thermoplastic material. It is contemplated that the cushion 32 may include a combination of monofilaments and filaments that are made of multiple materials and are not monofilaments.

Filaments 122 that are randomly looped, bent, looped, curled, or entangled are bonded together where one filament 122 contacts another filament 122, thereby resulting in a lightweight, air permeable cushion (e.g., cushion 32 and/or 42) or mesh structure comprising openings or voids between the filaments 122.

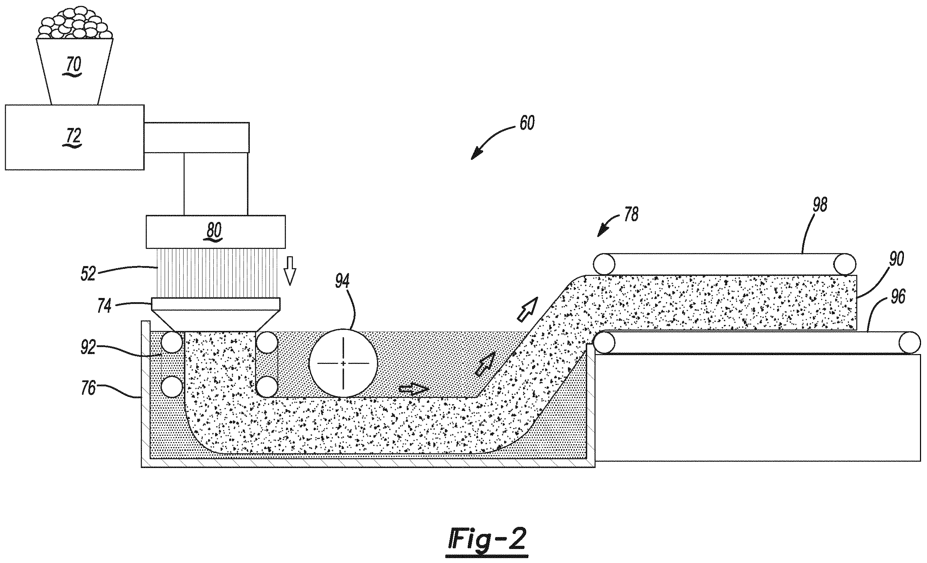

An example of a manufacturing system 60 for making a filament mesh structure 120 for a cushion 32 is shown in Figure 2. In this example, the manufacturing system 60 comprises a material supply 70, an extruder 72, and a funnel 74. The manufacturing system 60 also comprises a cooling tank 76, and a material handling subsystem 78.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

Referring to Figures 2 and 4, the extruder 72 melts the material stock and extrudes the material stock into a set of filaments 122. The extruder 72 may have any suitable configuration. In some configurations, the extruder 72 comprises a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, comprises multiple through holes or filament forming openings through which the molten material passes. A single filament 122 is extruded from each through hole. The filaments 122 fall downward from the die 80 under the force of gravity into the funnel 74.

The funnel 74 consolidates or groups the filaments 122 into a more compact arrangement in which the filaments bend, curl, or loop and a filament 122 contacts and bonds to at least one other filament 122. The funnel 74 comprises an inlet opening or funnel inlet and an outlet opening or funnel outlet that is smaller than the funnel inlet. Individual separated filaments 122 enter the funnel inlet. The filaments 122 bend, curl, or loop and move into contact as they accumulate. The filaments 122 move through the funnel 74 toward the funnel outlet. Some filaments may slide along the funnel 74 or an intervening sheet that is disposed on the funnel 74 as the filaments move toward the funnel outlet. Bonds are formed between filaments 122 at the points of contact while openings or voids between filaments 122 are present at other locations where one filament 122 does not contact or bond to another filament 122. The entangled and bonded filaments 122 pass through the funnel outlet of the funnel 74 and enter the cooling tank 76. For convenience in reference, the bonded filaments 122 are referred to as a mesh member or filament mesh structure 120.

The cooling tank 76 holds a liquid, such as water or a mixture of water and another fluid. The liquid in the cooling tank 76 helps support the entangled and bonded filaments 122 to limit further compacting or consolidation of the filaments 122 into a less open or less porous arrangement and maintains a desired porosity and density of the filament mesh structure 120. Thus, the liquid provides some buoyancy or resistance that can result in additional bending, curling, or looping of the filaments 122 adjacent to the surface of the liquid or within the funnel 74 to further build the filament mesh structure 120. The liquid also cools the filaments 122 when the filaments 122 are in the liquid. For instance, the liquid cools the filaments 122 from the outside to solidify the filaments 122 and prevent the filaments 122 from bonding at additional locations. At this point, the filaments 122 are relatively stiff and no longer in a plastic state and thus generally maintain a shape and are not moldable or reformable without being reheated.

The material handling subsystem 78 transports the filament mesh structure 120 through the cooling tank 76. The material handling subsystem 78 comprises various rollers and conveyors that help move the filament mesh structure 120 through the liquid and out of the liquid. In some configurations, a tractor conveyor 92 is provided in the cooling tank 76 to help pull the filament mesh structure 120 away from the funnel 74 and to counter buoyancy of the filaments 122.

One or more other rollers, such as roller 94, keep the filament mesh structure 120 submerged in the liquid and guide the filament mesh structure 120 through the cooling tank 76. For example, the roller 94 may guide the filament mesh structure 120 toward a conveyor belt 96 and shaker table 98 that are disposed outside of the cooling tank 76. The shaker table 98 shakes the filament mesh structure 120 while it is on the conveyor belt 96 to remove liquid. Alternatively, or in addition, the filament mesh structure 120 may be squeezed to remove liquid, air may be blown toward the filament mesh structure 120 to help remove liquid from the filament mesh structure 120, or both. It is also contemplated that the filament mesh structure 120 may also be allowed to drip dry, or dry in ambient air.

The manufacturing system 60 described above is a continuous flow process in which the filament mesh structure 120 is formed as a continuous structure when filament extrusion is not interrupted. Further processing of the filament mesh structure 120 is provided after exiting the cooling tank 76 to cut the filament mesh structure 120 into individual pieces or blanks for individual cushions. Such processing is conducted by a cutting subsystem of the manufacturing system 60. The cutting system may be of any suitable type. For instance, the cutting system may employ a blade, knife, hot knife, saw, fluid jet, or the like to cut the filaments 122 of the filament mesh structure 120 into a blank. The cutting system may be used to shape or contour the blank. It is also contemplated that a blank may be further shaped or contoured with other manufacturing processes, such as molding of the entire blank or a portion thereof.

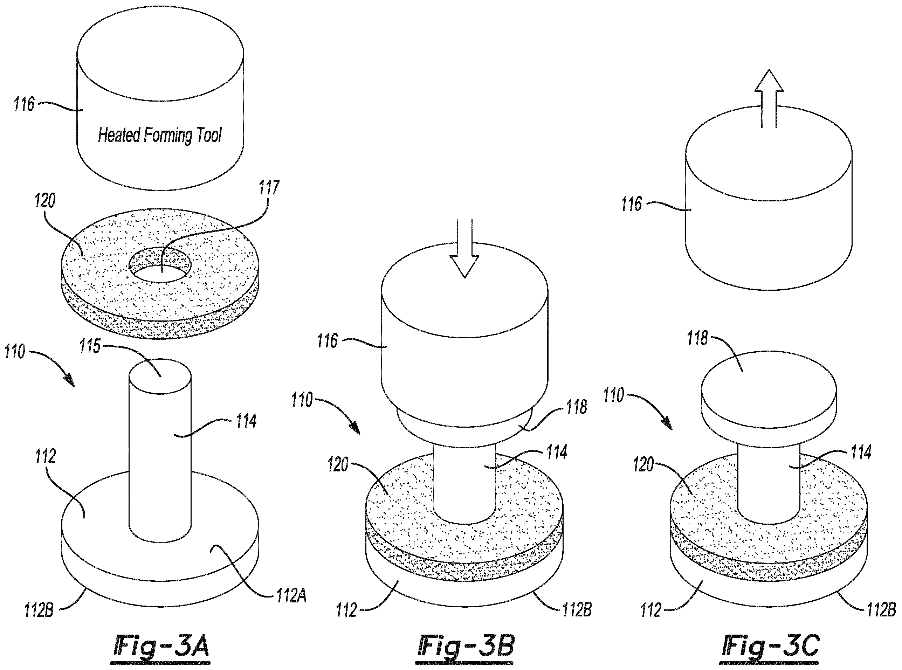

Referring to Figures 1 and 3A-3C, a fastener 110 is diagrammatically illustrated that comprises a plate 112, or base portion, and a stake 114, or stake portion. The stake comprises a distal end 115 that is flat as shown but also may be rounded. As shown in Figure 3A, openings 117 can be provided by pre-drilling the three-dimensional mesh structure 120 and aligning the opening 117 with the stake 114. A thermal tool 116 is shown to be positioned above the stake. The thermal tool 116 (hereinafter tool 116) is an ultrasonic tool. Alternatively, the tool 116 may be a heat staking tool heated by a resistance heating element or a laser heating tool.

Referring to Figure 3B, the fastener 110 is shown with the tool 116 forming a distal end of the stake 114. A head 118 is formed on the stake 114 by the tool 116.

Referring to Figure 3C, the fastener 110 is shown after the head 118 comprises been formed on the stake 114 and the tool 116 is shown being retracted from the fastener 110.

Referring to Figure 4, an example of a three-dimensional mesh structure 120 is shown. The three-dimensional mesh structure 120 may be incorporated in a cushion 32, such as a cushion for a vehicle seat, or for an interior trim part. The three-dimensional mesh structure 120 for a vehicle seat is proposed for a seat back, a seat bottom, or combinations thereof. The three-dimensional mesh structure 120 may be at least partially concealed by the trim cover assembly and may be directly or indirectly supported by a support structure of a seat assembly, such as a frame, panel, support wires, or the like. The three-dimensional mesh structure may partially or completely replace a conventional foam seat cushion.

The three-dimensional mesh structure 120 may be a three-dimensional mesh structure formed of randomly looped and bonded filaments 122. The filaments 122 are extruded filaments made of a thermoplastic material, such as a thermoplastic resin that is polyamide-based, polyester-based, polyimide-based, polyolefin-based, polypropylene-based, polystyrene-based, or combinations thereof. As one example, filaments 122 may be made of linear low-density polyethylene (LLDPE) or may be of High-Density Polyethylene (HDPE). As such, the three-dimensional mesh structure 120 and its filaments 122 are not foam parts made of urethane or polyurethane foam. If a filament 122 comprises reinforcement fibers, the reinforcement fibers can be thermoset plastic and do not need to be thermoplastic.

The extruded filaments 122 may be randomly looped, curled, or entangled and may be bonded together where one filament 122 contacts another, thereby resulting in a lightweight, air permeable cushion comprising openings or voids between the filaments 122. One method of making an extruded filament mesh cushion is disclosed in United States patent application number 17/555,875, which is hereby incorporated by reference in its entirety.

The process used to make a three-dimensional mesh structure may result in a three-dimensional mesh structure 120 that comprises a generally uniform cross-section, such as a rectangular cross-section. Moreover, the filaments 122 of the three-dimensional mesh structure may be cooled and hardened such that the filaments 122 are relatively stiff and no longer in a plastic state and thus not moldable or formable. A generally uniform cross-section may not provide a desired seat profile. Thus, it may be desired to alter the cross section of the three-dimensional mesh structure 120 from its original generally uniform cross-sectional profile to provide one or more indentations, protruding regions, curved regions, and the like. As an example, the three-dimensional mesh structure 120 or a portion thereof may be heated with the exterior shape being reformed.

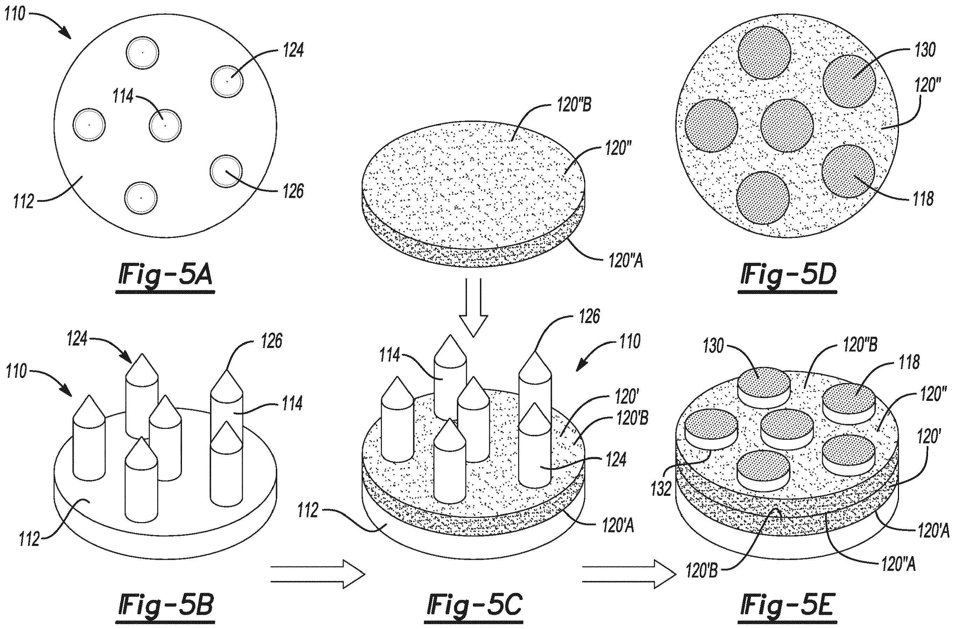

Referring to Figure 5A, the fastener 110 shown to include the plate 112 and six stakes 114. The stakes 114 initially have a distal end 124 comprising a point 126, or tapered end, to facilitate insertion into a three-dimensional mesh structure 120, shown in Figure 4. Alternatively, the distal end 124 can be flat or rounded as shown in Figure 3A The three-dimensional mesh structures 120 are not provided with holes for receiving the stakes 114 that form the holes. Alternatively, the three-dimensional mesh structures 120 are pre-drilled to form the holes for receiving the fastener 110.

Referring to Figure 5B, the fastener 110 is shown to include the plate 112 and six stakes are shown before the head 118 comprises been formed on the stake 114.

Referring to Figure 5C, the fastener 110 is shown with a first three-dimensional mesh structure 120' received on the fastener 110 and a second three-dimensional mesh structure 120" in position to be assembled to the stakes 114 and onto the three-dimensional mesh structure 120'.

Referring to Figure 5D and 5E, the fastener 110 is shown to be used to join the first three-dimensional mesh structure 120' to the second three-dimensional mesh structure 120." The stakes 114 extend through the three-dimensional mesh structures and the distal end of the stakes 114 are formed into the head 118. The head 118 comprises an end surface 130 and an interlocking surface 132. The end surface 130 as shown is exposed and outboard of second three-dimensional mesh structure 120".

Referring to Figure 6, the end surface 128 is recessed inside the three-dimensional mesh structure 120 with the randomly looped and bonded filaments 122A disposed between the head 118 and a top surface of the second three-dimensional mesh structure 120." At least one weld 125 is formed by the tool 116 (shown in the previous Figures) between the head 118 and the filaments 122 as the head 118 is formed. The tool 116 compresses the filaments 122 against the head 118 of the fastener 110. The head 118 of the fastener 110 is contacted by the tool 116 pressing against a first portion 122A of the polymer fibers 122 is disposed between the end surface 128 of the head 118 resulting in the polymer fibers 132 being welded to the head 128. A second portion 122B of the filaments disposed between the interlocking surface 130 and the plate 112 resists removal of the fastener 110 after assembly to the three-dimensional mesh structure 120.

An alternative embodiment of the fastener 132 is shown that comprises a clip 134, or a hook, a plug, or other attachment feature. The clip 134 is used to secure the fastener 132 to a frame 136, a part supporting surface, or an element of a vehicle seat. While only one stake 114 and one clip are shown, a plurality of stakes 114 and a plurality of clips 134 may be provided on the fastener 110. One or more of the clips 134 are provided on the opposite side 112B of the plate 112 from the one side 112A of the plate 112 from which the stakes extend.

According to one aspect of this disclosure, a fastener 110 comprising at least one stake 114 is disclosed that extends from one side 112A of the plate 112. A first body 120' and a second body 120" each comprising a plurality of extruded polymer filaments 122 randomly oriented and bonded together to form a three-dimensional mesh structure 120 comprising at least a first side 120A and a second side 120B. The stake 114 extends from the first side 120A of the first body 120' through the first body 120' and into the second body 120," wherein a distal end 124 of the at least one stake 114 comprises a head 118, and wherein a portion of the extruded polymer filaments 122 are disposed between the head 118 and the first side 120A of the first body 120.'

According to another aspect of this disclosure, a fastener 110 apparatus is disclosed that comprises a body 120 comprising a plurality of extruded polymer filaments 122 randomly oriented and welded together to form a three-dimensional mesh structure 120 in a first shape with at least a first side 120A and a second side 120B. The fastener 110 also comprises a plurality of polymer stakes 114 extending from a base plate 112 through a first surface 120A of the body 120 toward a second surface 120B of the body 120 to a location within the body between the first surface 120A and the second surface 120B of the body 120. A distal end 124 of the stakes 114 comprises an enlarged head 118 connected on an end surface 128 to a first portion 122A of the extruded polymer filaments 122. A retention surface 130 of the enlarged head 118 facing the base plate 112 is configured to engage a second portion 122B of the polymer fibers 122 that are disposed between the retention surface 130 and the base plate 112.

Other alternative and additional aspects of the above-described aspects of this disclosure in the two preceding paragraphs can be combined with one or more of the following aspects of the disclosure below:

The head 118 is recessed inside the second body 120" and contacts a first portion of the filaments 122 between the head 118 and the second side 120B of the second body 120".

The distal end 124 of the stake 114 is tapered toward a tip 126, or point, of the distal end 124 and the distal end 124 of the stake 114 is formed after insertion to form the head 118.

A weld 125 secures the end surface 128 of the head 118 to the first portion 122A of the filaments 122.

The second portion 122B of the filaments 122 resists removal of the stake 114 due to interference between the head 118 and the second portion 122" of the filaments 122.

The distal end 124 of the plurality of polymer stakes 114 comprises a pointed tip 126 when initially inserted into the body 120, wherein after being inserted into the body 120 the pointed tip 126 is heated and formed into the enlarged head 118.

Heating the tip 126 and forming the enlarged head 118 also causes the first portion 122A of the extruded polymer filaments 122 to be welded to the enlarged head 118.

The at least one polymer stake 114 comprises a plurality of stakes 114 extending from the plate 112. The plate 112 may be referred to as a button, a base wall, or a support member.

The plurality of extruded polymer filaments 122 is formed of either Linear Low-Density Polyethylene (LLDPE) or High-Density Polyethylene (HDPE).

The plurality of polymer stakes 114 is formed of either Linear Low-Density Polyethylene (LLDPE) or High-Density Polyethylene (HDPE).

According to another aspect of this disclosure, a method is disclosed for providing a fastener 110 in a body 120 comprising a plurality of extruded polymer filaments, or strands, that are connected to form a three-dimensional mesh structure 120 in a first shape with at least a first side 120A and a second side 120B. According to the method, at least one stake 114 extends from the plate 112 and is inserted into a first side 120A. The stake 114 comprises a distal end 124 opposite the base portion 112. The stake 114 is inserted into a first side 120A of the body 120 and toward a second side 120B of the body 120. The distal end 124 of the at least one stake 114 is formed to form the head 118 on the distal end.

Other aspects of this disclosure relating to the above method can be combined with one or more of the following aspects of the disclosure below:

The step of forming the stake 114 to form the enlarged head 118 is performed with an ultrasonic heating tool 1116. Alternatively, the step of forming the stake 14 to form the head 118 is performed with a heat staking tool 116.

The polymer strands 122, the stakes 114, and the base portion 112 are all formed of either Linear Low-Density Polyethylene (LLDPE) or High-Density Polyethylene (HDPE).

The at least one stake 114 comprises a point 126 prior to being inserted into the body 120, The forming step and the welding step are performed with an ultrasonic heating tool 116 or another type of heating tool. The step of deforming the stake 114 to form the enlarged head 118 is performed with the same tool.

The head 118 comprises an end surface 128 and an interlocking surface 130 that faces the opposite direction from the end surface 128. The end surface 128 is welded to a first portion of the polymer fibers 122A with the interlocking surface 130 being oriented to engage a second portion 122B of the polymer fibers 122 disposed between the first surface 120A of the body 120 and the interlocking surface 130.

A second body 120" comprising a second plurality of extruded polymer strands 122" of the filaments 122 that are connected to form a second three-dimensional structure 120" in a second shape with at least a third side and a fourth side, assembling the second body 120" onto the first body 120', and during the inserting step the at least one stake 114 is inserted into the second body 120" to attach the first body 120' body to the second body 120."

During the forming step the end surface 128 is welded to a first portion 122A of the polymer fibers 120 with the interlocking surface 130 being oriented to engage a second portion 122B of the polymer fibers 122 disposed between the first surface 120A of the pad and the interlocking surface 132.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. An apparatus, comprising:
a fastener comprising at least one stake, wherein the stake extends from one side of a plate; and
a first body and a second body, wherein each of the first body and the second body comprise a plurality of extruded polymer filaments randomly oriented and bonded together to form a three-dimensional mesh structure comprising at least a first side and a second side, wherein the stake extends from the first side of the first body through the first body and into the second body, wherein a distal end of the at least one polymer stake comprises a head, and wherein a portion of the plurality of extruded polymer filaments are disposed between the head and the first side of the first body.

2. The apparatus of claim 1, wherein the head is recessed inside the second body, and wherein the head contacts a first portion of the filaments between the head and the second side of the second body.

3. The apparatus of any of the preceding claims, wherein the distal end of the stake is tapered toward a tip of the distal end before the at least one stake is inserted into the first side of the first body.

4. The apparatus of any of the preceding claims, further comprising a weld securing the distal end of the head to a first portion of the filaments, wherein preferably a second portion of the filaments resist removal of the stake due to interference between the head and the second portion of the filaments.

5. The apparatus of any of the preceding claims, wherein the at least one stake comprises a plurality of stakes extending from the plate.

6. The apparatus of any of the preceding claims, further comprising:
a clip disposed on the fastener on a second side of the plate, wherein the clip is adapted to be attached to a support structure.

7. An apparatus, comprising:
a first body comprising a plurality of extruded polymer filaments randomly oriented and welded together to form a three-dimensional mesh structure in a first shape comprises at least a first side and a second side; and
a plurality of polymer stakes extending from a base plate through a first side of the first body toward a second side of the first body, wherein a distal end of each of the stakes comprises a head, wherein the head comprises a retention surface facing the base plate that engages the polymer filaments that are disposed between the retention surface and the base plate.

8. The apparatus of claim 7, further comprising:
a second body comprising a second plurality of extruded polymer filaments randomly oriented and welded together to form a second three-dimensional mesh structure comprises at least a first side and a second side, wherein the second body is assembled onto the first body and wherein the stakes are inserted into the second body after the stakes are inserted into the first body to secure the second body to the first body.

9. The apparatus of claim 7 or 8, wherein the plurality of extruded polymer filaments is formed of either Linear Low-Density Polyethylene (LLDPE) or High-Density Polyethylene (HDPE), and/or wherein the plurality of polymer stakes is formed of either Linear Low-Density Polyethylene (LLDPE) or High-Density Polyethylene (HDPE).

10. A method, comprising:
inserting the at least one stake extending from one side of a plate portion of a fastener into a first side of a body comprising a plurality of extruded polymer strands that are connected to form a three-dimensional structure in a first shape with at least a first side and a second side, wherein the stake comprises a distal end opposite the plate portion, and
forming the distal end of the at least one stake to form a head on the distal endwherein preferably the step of forming the head on the stake further comprises applying heat to the stake with a tool comprising an ultrasonic heating tool, or a heat staking tool.

11. The method of claim 10, wherein the polymer strands, the stakes, and the base portion are all formed of either Linear Low-Density Polyethylene (LLDPE) or High-Density Polyethylene (HDPE).

12. The method of claim 10 or 11, wherein the at least one stake is pointed prior to inserting into the body, wherein the deforming step and the welding step comprise heating utilizing an ultrasonic or a resistance heating element that forms the point of the stake into the head.

13. The method of any of claims 10 to 12, wherein the at least one stake comprises a plurality of stakes that extend from the plate, and wherein the plurality of stakes is inserted into the body of plurality of extruded polymer strands, and wherein the plurality of stakes are formed into a head on the stakes.

14. The method of any of claims 10 to 13, wherein the head comprises an interlocking surface facing the first side of the body and an end surface facing away from the first side,, wherein preferably the distal end of the stake is inserted into the first body, and into the second body, wherein an interlocking surface of the distal end engages a portion of the polymer strands disposed between the base and the interlocking surface.

15. The method of any of claim 10 to 14, further comprising:
providing a second body comprising a second plurality of extruded polymer strands that are connected to form a second three-dimensional structure in a second shape comprising at least a third side and a fourth side;
assembling the second body onto the first body;
wherein during the inserting step the at least one stake is inserted into the second body to attach the body to the second body, preferably wherein during the forming step the end surface is welded to a first portion of the polymer fibers, and further comprising the interlocking surface being oriented to engage a second portion of the polymer fibers disposed between the first surface of the pad and the interlocking surface.
